# EUROPEAN PATENT SPECIFICATION

(11) **EP 1 746 273 B1**
(45) Date of publication and mention of the grant of the patent: **05.09.2007**
(21) Application number: 05425537.7
(22) Date of filing: 22.07.2005
(51) Int. Cl.: F02D 9/10, F02D 11/10, B60R 25/04, F02N 11/08, B60R 25/10

(54) **Member for controlling airflow to an internal combustion engine of a motor vehicle**
Vorrichtung zur Steuerung der Luftmasse in einer Brennkraftmaschine
Dispositif de controle de l'air admise dans un moteur a combustion interne

(43) Date of publication of application: 24.01.2007
(73) Proprietor: MAGNETI MARELLI POWERTRAIN S.p.A., 20011 Corbetta (IT)
(72) Inventor: Fiorentini, Maurizio, 40062 Molinella (IT); Diaco, Marco, 10060 Bricherasio (IT); Grossi, Claudio, 40057 Quarto Inferiore (IT); Gaviani, Giovanni, 47900 Rimini (IT)
(74) Representative: Cerbaro, Elena

(56) References cited:
- EP-A- 0 894 973
- EP-A- 1 143 129
- EP-A- 1 167 724
- US-A1- 2004 094 121
- PATENT ABSTRACTS OF JAPAN vol. 2003, no. 12, 5 December 2003 (2003-12-05) & JP 2004 217140 A (MORIC CO LTD), 5 August 2004 (2004-08-05)
- PATENT ABSTRACTS OF JAPAN vol. 2003, no. 02, 5 February 2003 (2003-02-05) & JP 2002 293216 A (SAN VIP INC; UEDA JAPAN RADIO CO LTD), 9 October 2002 (2002-10-09)

## Description

The present invention relates to a member for controlling airflow to an internal combustion engine of a motor vehicle.

As is known, last-generation motor vehicles, such as scooters, mopeds, etc., are equipped with an electronic central control unit for controlling the engine on the basis of a number of user command signals and as a function of information and a number of quantities measured by a number of sensors on the vehicle; and a security system, referred to generally as an "immobilizer", which instructs the electronic central control unit to disable ignition of the engine to prevent theft of the vehicle.

The security system typically comprises a transponder integrated in the vehicle ignition key and containing a predetermined identity code; an identity code reading unit; and a control module, which receives the identity code from the reading unit, and accordingly generates a control signal authorizing or preventing ignition of the engine by the electronic central control unit.

When the user activates the security system, e.g. by removing the key from the ignition circuit, the control module generates the control signal to prevent ignition of the engine by the electronic central control unit, and, at the same time, activates the central control unit to turn on a LED display to show the security system is activated. In this condition, though its processing activity is reduced, by substantially catering to turning on and controlling the LEDs, the electronic central control unit still remains active, and so consumes an excessive amount of electricity when the disabling condition, i.e. activation of the security system, is prolonged beyond a given time interval. In fact, the electronic central control unit typically comprises a microprocessor which, though designed to perform an extremely high number of command, diagnosis, and engine control operations, consumes a large amount of electricity in the ignition disabling condition, in which the electronic central control unit provides solely for lighting the indicator LEDs.

As is also known, over the past few years, a demand has arisen to increase integration of mechanical and electronic component parts of motor vehicles to simplify and speed up component part assembly, on the one hand, and to reduce vehicle assembly cost, on the other. To which end, it has been proposed to integrate the above electronic central control unit, designed solely to perform the main engine control functions, in the air control member, i.e. the throttled body, of the vehicle, and to connect the electronic central control unit over external communication buses to the various electronic devices located outside the throttled body and typically comprising the measuring sensors and the control module implementing the immobilizer function.

Despite the effectiveness of the above solution, the degree of electric-mechanical vehicle component integration is still low, as compared with the requirements of current vehicle manufacturing systems.

US-2004/094121 relates to a throttle-valve housing having a continuous throttle opening for a throttle-valve which is arranged on a throttle-valve shaft, and a housing having a housing cover and a housing body. An electric drive and a first electronic mechanism for the drive are arranged in the housing, for displacing the throttle-valve shaft.

EP-1143129 relates to a throttle valve control apparatus provided with a throttle sensor which is in trouble at a low possibility and has a long service life, whereby an accurate output of a throttle opening degree can be obtained.

It is therefore an object of the present invention to provide a member for controlling airflow to an internal combustion engine of a motor vehicle, which is designed to house an electronic central control unit performing both conventional main engine control functions and the immobilizer function, and which at the same time reduces electricity consumption in the engine ignition disabling condition, so as to permit prolonged activation of the security system.

According to the present invention, there is provided a member for controlling airflow to an internal combustion engine of a motor vehicle, as claimed in Claim 1 and preferably in any one of the following Claims depending directly or indirectly on Claim 1.

A non-limiting embodiment of the present invention will be described by way of example with reference to the accompanying drawings, in which:
Figure 1 shows an exploded view in perspective of a member for controlling airflow to an internal combustion engine of a motor vehicle;
Figure 2 shows a lateral section of the Figure 1 airflow control member;
Figure 3 shows a block diagram of the electronic central control unit integrated in the throttled body of the Figure 1 airflow control member.

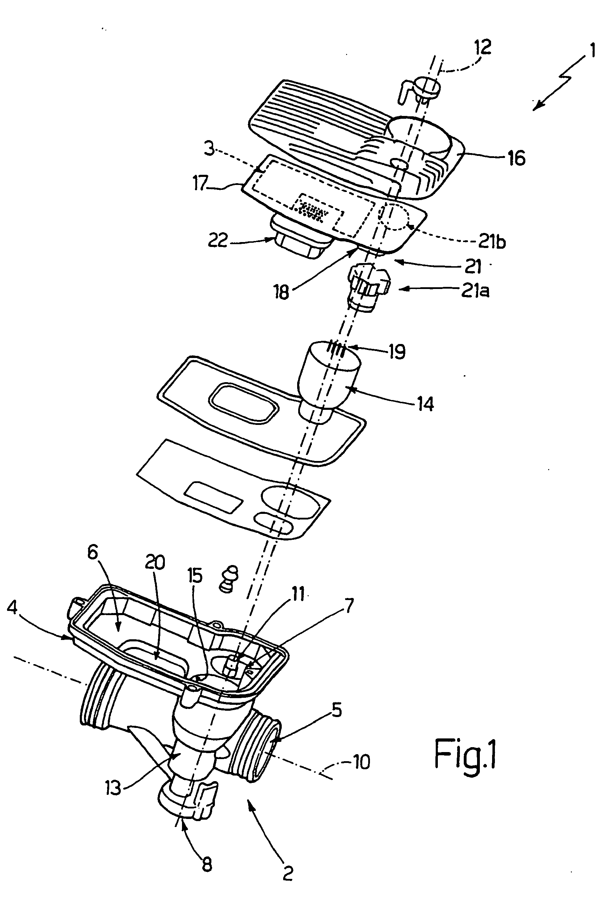

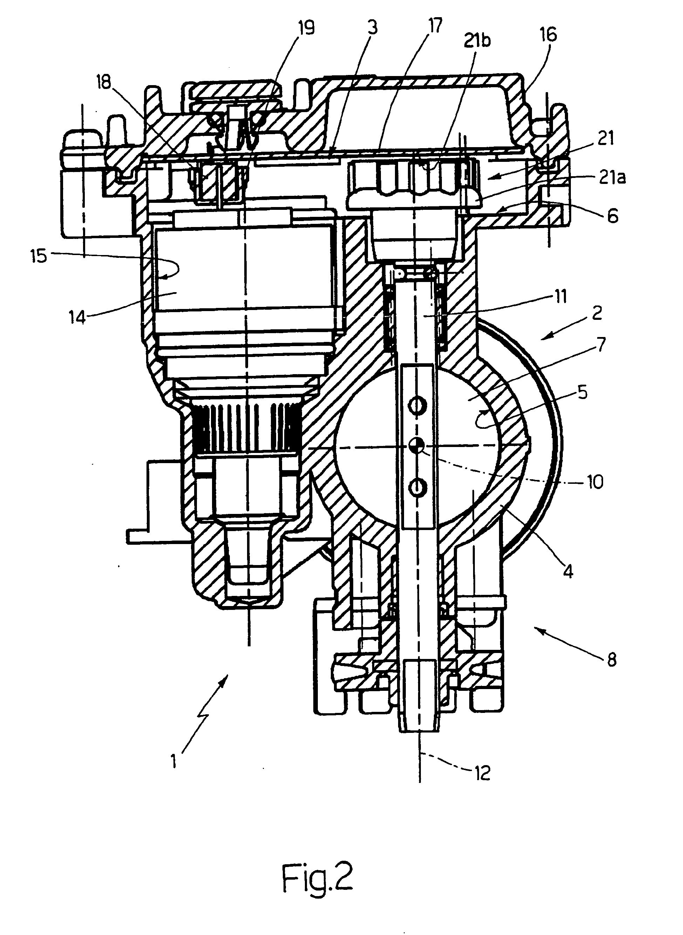

With reference to Figures 1 and 2, number 1 indicates as a whole a member for controlling airflow to an internal combustion engine (not shown) of a motor vehicle, such as a four-stroke, one-cylinder engine.

Member 1 substantially comprises a throttled body 2 for supplying a combustion-supporting fluid (air) to the engine; and an electronic central control unit 3 (shown schematically by a dash line in Figure 1) integrated in throttled body 2, and which, in addition to the main engine on/off, diagnosis, and control function operations, also performs security operations, i.e. disables ignition of the engine, as part of the immobilizer function.

Throttled body 2 comprises a preferably metal casing 4, in turn comprising a feed conduit 5, in which flows a combustion-supporting fluid flowing along an intake manifold (not shown) of the engine, and a cavity 6 located on top of conduit 5 and shaped to house electronic central control unit 3.

With reference to Figure 2, throttled body 2 also comprises a throttle valve 7 housed movably inside feed conduit 5 to regulate combustion-supporting fluid flow as a function of its position inside conduit 5; and an actuating device 8 for selectively moving throttle valve 7 to control combustion-supporting fluid flow. More specifically, conduit 5 extends coaxially with an axis 10; and throttle valve 7 is fitted to a shaft 11, which extends coaxially with an axis 12 coplanar with and perpendicular to axis 10, and is fitted through the lateral wall of conduit 5 so that one end projects partly inside cavity 6. Shaft 11 is mounted to rotate, and so rotate throttle valve 7, about axis 12.

With reference to Figures 1 and 2, throttled body 2 also comprises a bypass circuit (not shown) connected to the feed conduit 5 and formed in the body of casing 4, beneath cavity 6 and to the side of conduit 5; and an electric motor 14 housed inside a seat 15 formed in the body of casing 4, beneath cavity 6, and which regulates airflow to the bypass circuit.

In the example shown, electric motor 14 is a step motor controlled by electronic central control unit 3 and having a substantially cylindrical outer casing; and seat 15 is substantially complementary in shape to the outer carcass of motor 14, so as to house the motor.

With reference to Figure 1, cavity 6 formed in the body of casing 4 is substantially rectangular, and is open at the top to permit insertion of electric motor 14 inside seat 15.

Throttled body 2 also comprises a cover 16 which fits onto casing 4 to seal cavity 6 and define, with cavity 6, a fully closed casing housing electronic central control unit 3.

In the example shown, cover 16 is preferably made of the same material as casing 4, is substantially the same shape as cavity 6, and is fixed firmly to casing 4 by a known fastening system comprising, for example, a number of screws or bolts or similar.

In the example shown in the accompanying drawings, electronic central control unit 3 comprises a number of electronic circuits (described in detail below) appropriately fixed (integrated or molded) to a rigid supporting board 17 made of insulating material and which is fitted firmly to cover 16 so that, when the cover is fixed to casing 4, board 17 and therefore electronic central control unit 3 are housed inside cavity 6.

Board 17 is designed to support, on its outer surface facing away from cover 16, a connection module 18 which, in use, is connected electrically to a connection module 19 of electric motor 14 to supply electric motor 14 with the drive signals generated by electronic central control unit 3 to indicate the open position of the bypass circuit.

With reference to Figure 1, on its outer surface, board 17 also has a connection module 22 which, when board 17 is housed inside cavity 6, fits inside an opening 20, formed in the bottom wall of cavity 6 facing conduit 5, so as to project outwards of the bottom wall, and is connected to an external connection module (not shown) in turn connected by two-way communication lines to the various sensors and electronic devices on the vehicle.

With reference to Figures 1 and 2, member 1 also comprises a position sensor 21 housed inside cavity 6 and fitted to the end of shaft 11 of throttle valve 7 to supply, instant by instant, a signal indicating the angular position of valve 7.

More specifically, position sensor 21 is an inductive "contactless" sensor comprising a movable portion 21a fitted to shaft 11 of throttle valve 7 to rotate with the valve about axis 12; and a fixed portion 21b (shown by the dash line in Figure 1) fixed to board 17 to face the free end of movable portion 21a, opposite the end fitted to shaft 11, when board 17 is housed inside cavity 6.

In the example shown, movable portion 21a is defined by a magnetic rotor, and fixed portion 21b is defined by a stator, in turn defined by a preferably flat coil molded onto board 17 in a position substantially facing, spaced apart from, and coaxial with the rotor, to detect variations in magnetic field produced by rotation of the magnetic rotor, and so generate a signal related to the angle of rotation of throttle valve 7.

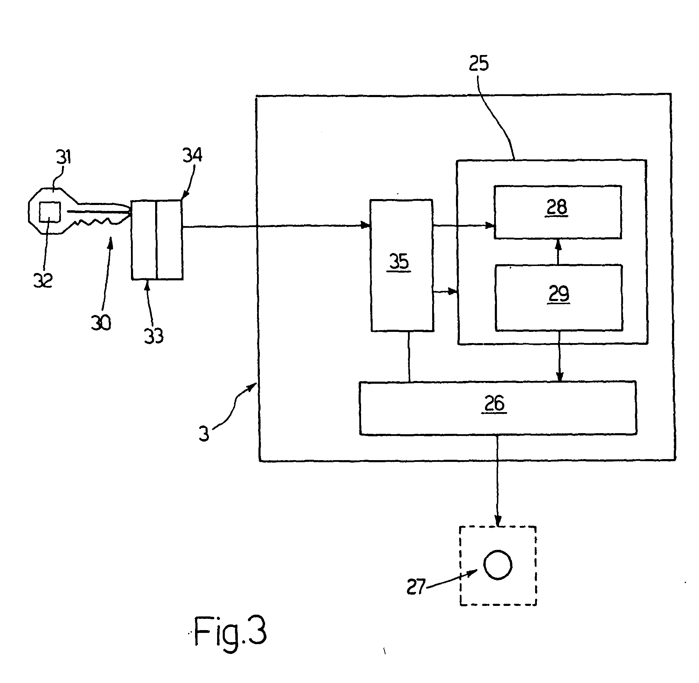

With reference to Figure 3, electronic central control unit 3 substantially comprises a main unit 25 for performing both engine control and diagnosis operations and immobilizer function operations; and an auxiliary unit 26 for controlling a number of luminous indicator devices, preferably comprising at least one LED 27, for indicating an ignition-disable condition, i.e. that the security system is activated.

More specifically, main unit 25 comprises an engine control module 28 for performing engine ignition, turn-off, control, and diagnosis operations; and a security system control module 29 which receives control information from an external control device 30, and accordingly disables or authorizes ignition of the engine by engine control module 28. More specifically, external control device 30 comprises a key 31 with a transponder 32 containing a user identity code; an ignition device 33 operated by key 31 to request ignition/turn-off of the engine; and a read circuit 34 for reading and encoding the identity code in transponder 32 into the control signal for supply to security system control module 29.

Security system control module 29 processes the control information in the control signal, and accordingly generates a control signal indicating an ignition-enable or -disable condition. More specifically, security system control module 29 determines whether or not the identity code conforms with a given authorization condition, and accordingly commands engine control module 28, by means of the control signal, to enable or disable ignition of the engine.

Auxiliary unit 26 receives the control signal from security system control module 29, and, in the event the control signal encodes an engine ignition-disable condition (corresponding to activation of the security system), turns on LED 27 in a given indicating mode.

With reference to Figure 3, electronic central control unit 3 also comprises a disabling unit 35, which receives the control signal generated by control device 30, and disables main unit 25 when auxiliary unit 26 is enabled, i.e. when the security system is activated. In this condition, electronic central control unit 3 conveniently operates in low-consumption mode, by merely maintaining operation of auxiliary unit 26, which, being designed to simply turn on and control LED 27, may be defined by a circuit or microprocessor consuming very little electricity.

On receiving another control signal from control device 30, disabling unit 35 reactivates main unit 25 to allow security system control module 29 to determine the existence of conditions required to disable the security system and so authorize engine control module 28 to turn on the engine. More specifically, if the authorization conditions exist, security system control module 29 commands auxiliary unit 26 to turn off the security-system-on indicator light, and controls engine control module 28 to enable ignition of the engine.

Conversely, if the authorization conditions do not exist, auxiliary unit 26 remains active, disabling unit 35 again disables security system control module 29, and engine control module 28 remains disabled.

The advantages of member 1 as described above are obvious: by implementing the immobilizer function in electronic central control unit 3 integrated in throttled body 2, the external control module catering specifically to the security system can be eliminated, thus enhancing integration of the mechanical and electrical components of the vehicle. Moreover, location of position sensor 21 inside cavity 6 sealed by cover 16 has the enormous advantage of safeguarding position sensor 21 against damage caused by dirt deposits on its electrical components, as in known throttled bodies employing position sensors defined by electric potentiometers. Such sensors, in fact, being fixed outside the throttled body casing, are particularly exposed to dirt deposits on the relative sliding electrical contacts, thus reducing the working life of the sensors.

Also noteworthy is the way in which assembly of the component parts of member 1 is conveniently simplified. That is, given the absence of electrical connections (sliding contacts) between movable portion 21a and fixed portion 21b of position sensor 21, assembly of the throttled body and of the movable portion of the position sensor inside the cavity of the throttled body can be kept separate from and independent of assembly of supporting board 17 to cover 16, so that assembly of member 1 can be completed at a later stage by a final operation comprising simply fixing cover 16 to casing 4 of throttled body 2. At this stage, in fact, supporting board 17 and, therefore, electronic central control unit 3 are inserted inside cavity 6, thus automatically aligning the stator, i.e. the fixed portion of position sensor 21, and the respective rotor. Fixing cover 16 to casing 4 also connects connection module 18 of board 17 to connection module 19 of electric motor 14, thus advantageously eliminating any internal electric wiring. Moreover, electricity consumption of electronic central control unit 3 is optimized in the disable condition, thus permitting prolonged operation of the security system with no risk of running down the vehicle batteries. In fact, in the disable condition, main unit 25 is disabled, and the visual indicator function of LED 27 is maintained active by auxiliary unit 26 which, being specifically designed for the purpose, requires a lower electrical power supply than main unit 25, thus greatly reducing overall electricity consumption of electronic central control unit 3. In fact, main unit 25 may be defined by a microprocessor designed to perform the main and immobilizer functions described above, and to switch to a standby, i.e. temporary disabled, condition when ignition of the engine is disabled, thus advantageously reducing consumption; and auxiliary unit 26 may be defined by an electronic circuit or low-power microprocessor designed specifically to control the LEDs.

Clearly, changes may be made to control member 1 as described and illustrated herein without, however, departing from the scope of the present invention as defined in the accompanying Claims.

## Claims

1. A member (1) for controlling airflow to an internal combustion engine of a motor vehicle, the member comprising a throttled body (2) having a throttle valve (7) for regulating airflow to said engine on command; the throttled body (2) is designed to house an electronic central control unit (3) comprising a security system control module (29), which receives a control signal containing an identity code of a user of said motor vehicle, determines whether or not said identity code conforms with a predetermined authorization condition, and accordingly commands enabling or disabling of ignition of the engine of said motor vehicle; said electronic central control unit (3) comprises an engine control module (28) for performing a number of main engine control functions; said member (1) being **characterized in that** an auxiliary control unit (26) for enabling luminous indicator means (27) to indicate disabling of said ignition of the engine; and disabling means (35) which, upon ignition being disabled, temporarily disable said engine control module (28) and said security system control module (29) to set the electronic central control unit (3) to a low electrical power consumption condition, and at the same time enable the auxiliary control unit (26) to enable said luminous indicator means (27) to indicate ignition of the engine is disabled.

2. A member as claimed in Claim 1, **characterized in that**, on receiving said control signal, said disabling means (35) enable said security system control module (29) to determine whether or not said identity code conforms with said predetermined authorization condition, so as to enable said engine control module (28) in the event said authorization condition is met.

3. A member as claimed in any one of the foregoing Claims, **characterized in that** said throttled body (2) comprises a casing (4) having a cavity (6) shaped to house said electronic central control unit (3).

4. A member as claimed in Claim 3, **characterized in that** said cavity (6) is open, and the throttled body (2) comprises at least one cover (16) which is fitted firmly to said casing (4) to seal said cavity (6).

5. A member as claimed in Claim 4, **characterized in that** said engine control module (28) and/or said security system control module (29) and/or said auxiliary control unit (26) and/or said disabling means (35) are fixed firmly to a rigid supporting board (17), which in turn is fixed to said cover (16) so as to be housed inside said cavity (6) when said cover (16) is fitted to said casing (4).

6. A member as claimed in any one of Claims 3 to 5, **characterized by** comprising a position sensor (21) fitted to said throttle valve (7) to determine the angular position of the throttle valve; said position sensor (21) being housed in said cavity (6).

7. A member as claimed in Claim 6, **characterized in that** said position sensor (21) comprises a movable magnetic portion (21a) fitted to said throttle valve (7) inside said cavity (6) to rotate about an axis of rotation (12) of the throttle valve (7); and a fixed electric portion (21b), which has no electrical contact with the movable magnetic portion (21a), and is fixed to said rigid supporting board (17) to detect variations in magnetic field produced by said movable magnetic portion (21a) as the throttle valve (7) rotates.

8. A member as claimed in Claim 7, **characterized in that** said fixed portion (21b) of said position sensor (21) comprises a flat coil molded onto said rigid supporting board (17) in such a position that, when said rigid supporting board (17) is housed inside the cavity (6), said flat coil faces said movable magnetic portion (21a).

## Patentansprüche

1. Bauteil (1) zum Steuern einer Luftströmung zu einem Verbrennungsmotor eines Kraftfahrzeugs, wobei das Bauteil aufweist einen Drosselkörper (2) mit einer Drosselklappe (7) zum steuerbefehlsabhängigen Regulieren der Luftströmung zum Motor; wobei der Drosselkörper (2) so ausgebildet ist, dass dieser eine elektronische Zentralsteuereinheit (3) aufnimmt, die ein Sicherheitssystem-Steuermodul (29) umfasst, welches ein Steuersignal empfängt, das einen Identitätscode eines Benutzers des Kraftfahrzeugs enthält, bestimmt ob der Identitätscode mit einer vorbestimmten Autorisierungsbedingung übereinstimmt und entsprechend ein Aktivieren oder ein Deaktivieren der Zündung des Motors des Kraftfahrzeugs befiehlt; wobei die elek-tronische Zentralsteuereinheit (3) ein Motorsteuermodul (28) zum Durchführen einer Anzahl von Haupt- Motorsteuerfunktionen umfasst; wobei das Bauteil (1) **gekennzeichnet ist durch** eine Zusatzsteuereinheit (26) zum Aktivieren eines Leuchtanzeigemittels (27), um ein Deaktivieren der Zündung des Motors anzuzeigen, und ein Deaktivierungsmittel (35) welches, bei deaktivierter Zündung, temporär das Motorsteuermodul (28) und das Sicherheitssystem-Steuermodul (29) deaktiviert, um die elektronische Zentralsteuereinheit (3) in einen niedrigen elektrischen Leistungsaufnahmezustand zu versetzen und gleichzeitig die Zusatzsteuereinheit (26) dahingehend zu aktivieren, das Leuchtanzeigemittel (27) in die Lage zu versetzen, anzuzeigen, dass eine Zündung des Motors deaktiviert ist.

2. Bauteil nach Anspruch 1, **dadurch gekennzeichnet, dass** beim Empfang des Steuersignals das Deaktivierungsmittel (35) das Sicherheitssystem-Steuermodul (29) in die Lage versetzt, zu bestimmen, ob der Identitätscode mit der vorbestimmten Autorisierungsbedingung zusammenpasst oder nicht, um so das Motorsteuermodul (28) in dem Fall zu aktivieren, dass die Autorisierungsbedingung erfüllt ist.

3. Bauteil nach einem der vorstehenden Ansprüche, **dadurch gekennzeichnet, dass** der Drosselkörper (2) ein Gehäuse (4) mit einem Hohlraum (6) umfasst, der so gestaltet ist, dass dieser die elektronische Zentralsteuereinheit (3) aufnimmt.

4. Bauteil nach Anspruch 3, **dadurch gekennzeichnet, dass** der Hohlraum (6) offen ist und der Drosselkörper (2) wenigstens eine Abdeckung (16) aufweist, welche fest an dem Gehäuse (4) angebracht ist, um den Hohlraum (6) abzudichten.

5. Bauteil nach Anspruch 4, **dadurch gekennzeichnet, dass** das Motorsteuermodul (28) und/oder das Sicherheitssystem-Steuermodul (29) und/oder die Zusatzsteuereinheit (26) und/oder das Aktivierungsmittel (35) fest an einer steifen Stützplatte (17) befestigt sind, welche wiederum an der Abdeckung (26) befestigt ist, um so in dem Hohlraum (6) aufgenommen werden zu können, wenn die Abdeckung (16) an dem Gehäuse (4) angebracht ist.

6. Bauteil nach einem der Ansprüche 3 bis 5, **gekennzeichnet durch** ein Aufweisen eines Positionssensors (21), der an der Drosselklappe (7) angebracht ist, um die Winkelposition der Drosselklappe zu bestimmen, wobei der Positionssensor (21) in dem Hohlraum (6) aufgenommen ist.

7. Bauteil nach Anspruch 6, **dadurch gekennzeichnet, dass** der Positionssensor (21) aufweist ein bewegliches magnetisches Teil (21a), das auf der Drosselklappe (7) in dem Hohlraum (6) sitzt, so dass dieses um eine Drehachse (12) der Drosselklappe (7) dreht, und einen fixiertes elektrisches Teil (21b), das keinen elektrischen Kontakt mit dem beweglichen magnetischen Teil (21a) hat und an der steifen Stützplatte (17) befestigt ist, um Variationen des Magnetfeldes zu erfassen, die durch das erste magnetische Teil (21a) erzeugt werden, wenn sich die Drosselklappe (7) dreht.

8. Bauteil nach Anspruch 7, **dadurch gekennzeichnet, dass** der fixierte Teil (21b) des Positionssensors (21) eine Flachspule umfasst, die auf die steife Stützplatte (17) in einer solchen Position angeformt ist, dass, wenn die steife Stützplatte (17) in dem Hohlraum (6) aufgenommen ist, die Flachspule dem beweglichen Teil (21a) zugewandt ist.

## Revendications

1. Organe (1) pour commander un débit d'air vers un moteur à combustion interne d'un véhicule à moteur, l'organe comprenant un corps étranglé (2) ayant une soupape d'étranglement (7) pour réguler un débit d'air audit moteur sur commande; le corps étranglé (2) est conçu pour accueillir une unité de commande centrale électronique (3) comprenant un module de commande d'un système de sécurité (29), qui reçoit un signal de commande contenant un code d'identité d'un utilisateur dudit véhicule à moteur, détermine si ledit code d'identité est conforme ou non à une condition d'autorisation prédéterminée, et ordonne en conséquence une permission ou un empêchement d'un allumage du moteur dudit véhicule à moteur; ladite unité de commande centrale électronique (3) comprend un module de commande de moteur (28) pour effectuer un nombre de fonctions de commande du moteur principales; ledit organe (1) étant **caractérisé en ce qu'**une unité de commande auxiliaire (26) pour permettre à un moyen à indicateur lumineux (27) d'indiquer un empêchement dudit allumage du moteur; et des moyens d'invalidation (35) qui, sur empêchement d'un allumage, empêchent temporairement ledit module de commande de moteur (28) et ledit module de commande d'un système de sécurité (29) de régler l'unité de commande centrale électronique (3) sur une condition de faible consommation de puissance électrique, et en même temps permettent à l'unité de commande auxiliaire (26) de permettre audit moyen à indicateur lumineux (27) d'indiquer qu'un allumage du moteur est empêché.

2. Organe comme revendiqué dans la revendication 1, **caractérisé en ce que**, sur réception dudit signal de commande, lesdits moyens d'empêchement (35) permettent audit module de commande d'un système de sécurité (29) de déterminer si ledit code d'identité est conforme ou non à.ladite condition d'autorisation prédéterminée, de manière à mettre en service ledit module de commande de moteur (28) dans le cas où ladite condition d'autorisation est remplie.

3. Organe comme revendiqué dans l'une quelconque des revendications précédentes, **caractérisé en ce que** ledit corps étranglé (2) comprend un carter (4) ayant une cavité (6) façonnée pour loger ladite unité de commande centrale électronique (3).

4. Organe comme revendiqué dans la revendication 3, **caractérisé en ce que** ladite cavité (6) est ouverte, et le corps étranglé (2) comprend au moins un couvercle (16) qui est fermement ajusté audit carter (4) pour sceller ladite cavité (6).

5. Organe comme revendiqué dans la revendication 4, **caractérisé en ce que** ledit module de commande de moteur (28) et/ou ledit module de commande d'un système de sécurité (29) et/ou ladite unité de commande auxiliaire (26) et/ou lesdits moyens d'empêchement (35) sont fermement fixés à un panneau de soutien rigide (17), qui est à son tour fixé audit couvercle (16) de manière à être logé à l'intérieur de ladite cavité (6) lorsque ledit couvercle (16) est ajusté audit carter (4).

6. Organe comme revendiqué dans l'une quelconque des revendications 3 à 5, **caractérisé par** le fait de comprendre un capteur de position (21) ajusté à ladite soupape d'étranglement (7) pour déterminer la position angulaire de la soupape d'étranglement; ledit capteur de position (21) étant logé dans ladite cavité (6).

7. Organe comme revendiqué dans la revendication 6, **caractérisé en ce que** ledit capteur de position (21) comprend une portion magnétique mobile (21a) ajustée à ladite soupape d'étranglement (7) à l'intérieur de ladite cavité (6) pour tourner autour d'un axe de rotation (12) de la soupape d'étranglement (7); et une portion électrique fixe (21b), qui n'a aucun contact électrique avec la portion magnétique mobile (21a), et est fixée audit panneau de soutien rigide (17) pour détecter des variations dans un champ magnétique produit par ladite portion magnétique mobile (21a) lorsque la soupape d'étranglement (7) est en rotation.

8. Organe comme revendiqué dans la revendication 7, **caractérisé en ce que** ladite portion fixe (21b) dudit capteur de position (21) comprend une bobine plate moulée sur ledit panneau de soutien rigide (17) dans une position telle que, lorsque ledit panneau de soutien rigide (17) est logé à l'intérieur de la cavité (6), ladite bobine plate fait face à ladite portion magnétique mobile (21a).
